# EUROPEAN PATENT APPLICATION

(11) **EP 1 324 011 A2**
(43) Date of publication of application: **02.07.2003**
(21) Application number: 02445149.4
(22) Date of filing: 12.11.2002
(51) Int. Cl.: G01F 1/28, G01P 13/00

(54) **Device for detecting the presence of flow of a fluid**

(30) Priority: 20.12.2001 SE 0104317
(71) Applicant: ITT MANUFACTURING ENTERPRISES, INC., Wilmington, Delaware (US)
(72) Inventor: Wikingsson, Anders, 114 23 Stockholm (SE); Svensson, Stefan, 114 22 Stockholm (SE)
(74) Representative: Larsson, Sten

(57) **Abstract**

The invention concerns a detecting and monitoring device for the liquid flow in a pump outlet.

A body (1) of permanent magnetic material is arranged to be able to move freely back and forth in the liquid flow in the pump outlet (3), the position of the body being decided by the intensity of the flow. A tongue element (4), which is located in a room separated from the pump outlet (3) by a wall, is influenced by the magnetic field from the body (1) and can thereby detect the position of the body and consequently the intensity of the flow. This knowledge is used to stop the energy supply of the pump motor when the intensity of the flow reaches a certain minimum value.

## Description

The invention concerns a device for monitoring the fluid flow in a pump outlet and in dependence thereof, controlling the current supply of an electrically driven pump motor.

The invention is especially adapted to be used in connection with so-called submersible pumps, where an electric motor, a hydraulic unit and an intermediate seal device as a compact unit are submersed in the pumped medium, water, and where the latter is used for cooling of the electric motor.

Pumps of this type are commonly used at construction sites, in mines etc and they very often operate during long periods without any supervision. If the pump, for some reason should cease to pump water, because of lack of water, because of the pump inlet being clogged etc, the pump outlet will contain air instead of water. As air has considerably worse cooling abilities as compared to water, there is a risk that the electric motor could be damaged. It is also a waste of energy to let the pump operate dry and in addition the parts in the hydraulic unit might be warn out because of the fact that the water contains abrasive particles that circulate within the pump housing.

In order to prevent over heating of the electric motor, it is known practice to arrange air evacuation valves in the outlet system, said valves being closed as long as water is present, but open and evacuate air when the pump runs dry. This solution, which is disclosed in Swedish Patent No 190 989, solves some of the problems mentioned above. However, pollutants contained in the pumped water may cause the valves to stay open and consequently decrease the efficiency.

As mentioned above, there is a demand for stopping the pump at times when there is a risk for dry running. One way to obtain this is to monitor the current consumption and to cut the supply when the consumption has reached a certain minimum value. This based upon the knowledge that the consumption decreases when only air is pumped. Such a solution is disclosed in Swedish Patent No 469 408.

This invention solves the problem to detect air in the outlet from a pump in a simple and secure way and to disconnect the current supply of the pump in dependence of said information. The invention is characterized by the enclosed claims.

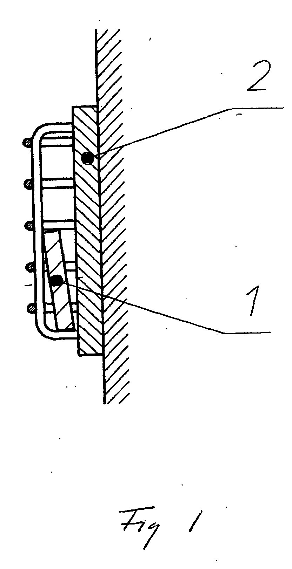

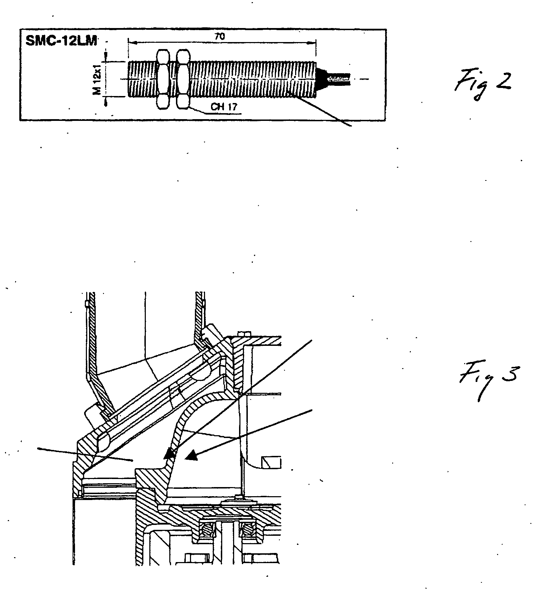

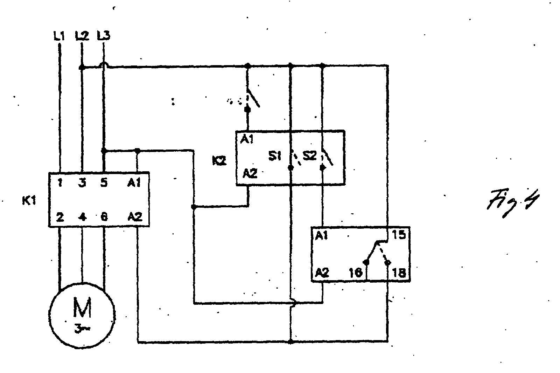

A preferred embodiment of the invention is described below with reference to the enclosed drawings. Fig 1 shows a detection device, Fig 2 a tongue element, Fig 4 a part of a submersible pump unit and 4 an electric diagram.

According to the invention a detecting device formed like a body 1 made of a permanent magnetic material and having a higher density than the pumped medium is arranged within a cage 2 located in the outlet from a submersible pump. The cage is provided with meshes wide enough not to obstruct the flow and is also so designed, that the body 1 is allowed to move a distance within the mainly vertically directed pump outlet 3. The position of the body is then dependent on the flow such, that a flow over a certain intensity brings the body to the upper part of the cage, while a flow below said value allows the body to move towards the lower part of the cage. The body is then allowed to move with a certain play within the cage in order to prevent impurities in the water from disturbing the movement.

The cage 2 is attached to a wall in the pump outlet, normally aluminum, and on the opposite side of said wall there is arranged a tongue element 4. Said element is influenced by the magnetic field emitted by the body 1, which penetrates the wall in such a way, that the position of the body can be decided, without the need for any lead-through in the wall. By a suitable adaptation of the density of the body 1 and considering the expected flow, it will be possible to determine whether a certain flow intensity has been reached or not. The indication of the tongue element is used to control an electric circuit which is arranged to cut the current supply of the electric motor at a suitable time, thus avoiding dry running of the pump.

The electric circuit can be provided with a time relay, which initiates restart of the pump after a certain time.

The cage 2 is designed to give the best possible freedom of movement for the body 1. In order to secure the function if the direction of the pump outlet differs from the vertical line, the cage may be designed with a downwards increasing area, thus making it easier for the body 1 to sink when the flow decreases or stops entirely.

One advantage with the invention is that the design is very insensitive to pollutants in the pumped medium. The parts that come into contact with the medium can be designed with very big tolerances which decrease the risks for clogging, while the sensitive parts are located in a room sealed from the pumped medium.

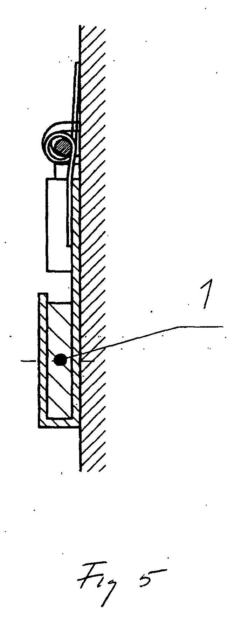

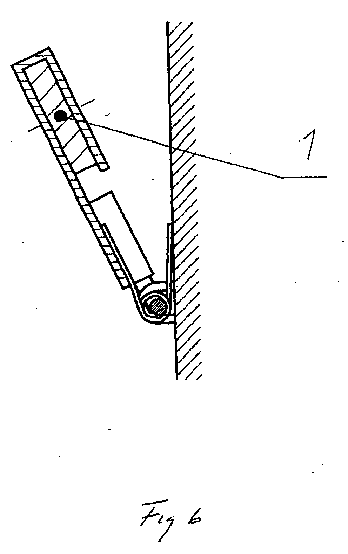

In the specification above a preferred embodiment has been described. Other solutions are possible which all fall within the scope of the invention. In Figs 5 and 6 is shown a devise comprising a body of permanent magnetic material arranged in a rocker, which takes different positions in dependence of the flow in the pump outlet. If the flow has stopped, the rocker takes a vertical position, Fig 5, while it tilts upwards at a certain flow, Fig 6. The change of the location of the body is registered by the tongue element at the opposite side of the wall in the same way as previously described.

The solution using a rocker is especially useful when it is expected that the pump might take a position lying down, which brings about a more or less horizontally directed pump outlet and consequently gravity force cannot be relied upon. A turning spring connected to the turning axle of the rocker can then be used to secure that the rocker takes its horizontal position when the flow has decreased. Also other variants can be used where the end positions of the rocker are so located, that only a slight turning movement is allowed. This solution may under certain circumstances be less sensitive to disturbances from outside.

Other possible solutions are to replace the rocker according to the above with a leaf spring or a rubber lip which changes its position at a certain flow or to arrange the body of permanent magnetic material on a pivoting arm, which is given a movement upwards along the wall at an increasing flow and where gravity force is used for obtaining the opposite movement.

## Claims

1. A detecting and monitoring device for the liquid flow in a pump outlet (3) to be used for controlling the current supply to the electrically driven pump motor in order to avoid dry running of the pump when the water level in the pump inlet is low,
**characterized in,**
**that** a body (1) of permanent magnetic material is located within the liquid flow and is arranged to be able to make a limited movement therein, mainly back and forth in the direction of said flow,
**that** the body (1) takes a front position as seen in the direction of the flow at a flow intensity over a certain value,
**that** the body (1) takes a rear position as seen in the direction of the flow, at a flow intensity below said value,
and **that** a tongue element (4) is located in a room separated from the fluid flow, said element (4) detects the location of the body (1) and initiates stop of the current supply to the pump motor when the body (1) approaches or takes its rear position as seen in the direction of the flow.

2. A detecting and monitoring device according to claim 1,
**characterized in,**
**that** the body (1) has a density higher than that of the pumped medium and is located in a cage (2) which restricts its movement,
**that** the body takes its highest possible position within the cage (2), the front position as seen in the direction of the flow, at a flow intensity over a certain value,
**that** the body (1) takes its lowest possible position within the cage (2), the rear position as seen in the direction of the flow, at a flow intensity below said value.

3. A detecting and monitoring device according to claim 2,
**characterized in,**
**that** the body (1) is designed like a massive or hollow cylinder and that the cage (2) has a width and a length that allows the body (1) to move with a considerable play.

4. A detecting and monitoring device according to claim 2,
**characterized in,**
**that** the cage (2) is designed with an upwards decreasing area in order to facilitate the movement of the body (1) in cases when the direction of the flow deviates from the vertical line.

5. A detecting and monitoring device according to claim 1,
**characterized in,**
**that** the body (1) is connected to a rocker which can pivot around an axle perpendicular to the direction of the flow and thereby is able to take different positions with reference to the direction of the flow.

6. A detecting and monitoring device according to claim 5,
**characterized in,**
**that** the rocker is spring loaded in the direction opposite the flow direction.

7. A detecting and monitoring device according to claim 1,
**characterized in,**
**that** the body (1) is connected to an arm, which can pivot around an axle perpendicular to the wall of the pump outlet and thereby is allowed to take different positions with reference to the direction of the flow.

8. A detecting and monitoring device according to claim 1,
**characterized in,**
**that** the body (1) is connected to a spring element which can change its position with reference to the direction of the flow at a certain flow intensity.
